# EUROPÄISCHE PATENTSCHRIFT

(11) **EP 4 427 033 B1**
(45) Veröffentlichungstag und Bekanntmachung des Hinweises auf die Patenterteilung: **20.05.2026**
(21) Anmeldenummer: 22813519.0
(22) Anmeldetag: 04.11.2022
(51) Int. Cl.: G01N 31/22, G01N 21/64

(54) **VERFAHREN ZUR QUALITATIVEN UND QUANTITATIVEN BESTIMMUNG VON PROTEINAGGREGATEN**
METHOD FOR QUALITATIVE AND QUANTITATIVE DETERMINATION OF PROTEIN AGGREGATES
PROCÉDÉ DE DÉTERMINATION QUALITATIVE ET QUANTITATIVE DES AGRÉGATS DE PROTÉINES

(30) Priorität: 07.11.2021 EP 21206824
(43) Veröffentlichungstag der Anmeldung: 11.09.2024
(73) Patentinhaber: PAIA Biotech GmbH, 51105, Köln (DE)
(72) Erfinder: PERROU, Aris, 51105 Köln (DE); MEISSNER, Christian, 51105 Köln (DE)
(74) Vertreter: Zehetner, Andrea Christine
(86) Internationale Anmeldenummer: PCT/EP2022/080767
(87) Internationale Veröffentlichungsnummer: WO 2023/079052

(56) Entgegenhaltungen:
- US-A1- 2010 028 935
- US-A1- 2021 072 237
- PAUL ALBERT JESURAN ET AL: "High-throughput analysis of sub-visible mAb aggregate particles using automated fluorescence microscopy imaging", ANALYTICAL AND BIOANALYTICAL CHEMISTRY, SPRINGER, BERLIN/HEIDELBERG, GERMANY, vol. 409, no. 17, 27 April 2017 (2017-04-27), pages 4149 - 4156, XP036256834, ISSN: 1618-2642, [retrieved on 20170427], DOI: 10.1007/S00216-017-0362-2

## Beschreibung

Die Anmeldung betrifft ein Verfahren zur qualitativen und quantitativen Bestimmung von Proteinaggregaten unter Verwendung einer speziell ausgestatteten Mikrotiterplatte und aggregatspezifischen Fluoreszenzfarbstoffen.

Aggregate biologischer Systeme, die auch High Molecular Weight Species (HMWS) genannt werden, sind Komplexe gleichartiger oder verschiedener Moleküle. Sie entstehen durch das Zusammenlagern von mehreren Molekülen, wodurch Di-, Tri- und auch Oligomere entstehen.

Proteinaggregationen entstehen meist dadurch, dass sich zwei oder mehrere Proteine über hydrophobe Stellen aneinanderlagern. Bei einer (teilweisen) Entfaltung von Proteinen, werden die zumeist im Inneren der Proteinstruktur vorhandenen hydrophoben Bereiche der Proteine für Wechselwirkungen zugänglich. Findet eine Bindung mit einem anderen Protein statt, kommt es zu Aggregatbildung.

Proteine neigen aufgrund ihrer Stabilität unterschiedlich stark zur Aggregation. Wenig stabile Proteine aggregieren leichter als stabile Proteine. Die Proteinstabilität wird durch die Matrix, in dem sich das Protein befindet, beeinflusst. Bei einer Destabilisierung kommt es zu einer zumindest teilweisen Störung der Proteinfaltung, die durch physikalische oder chemische Faktoren ausgelöst werden kann. Zu den Auslösern zählen u.a. Temperaturveränderungen, z.B. wie sie in Gefrier- und Schmelzzyklen auftreten, Einwirken von physikalischen Kräften (z.B. Scherkräften), die Zusammensetzung der Matrix, in der sich die Proteine befinden; insbesondere besteht zwischen der verwendeten Puffersubstanzen und -konzentrationen, dem pH-Wert, der Proteinkonzentration und der Anwesenheit von denaturierenden Agenzien und dem Auftreten von Aggregaten ein Zusammenhang.

Gerade bei der Herstellung von pharmazeutisch wirksamen biologischen Wirkstoffen (sogenannte Biologika) kommt es häufig zur Bildung von Aggregaten, denn die Biologika sind oft empfindliche, komplexe Proteine, die zudem vorüberwiegend in Zellkultur hergestellt werden. Gleichzeitig umfasst die Herstellung in Zellkultur Bedingungen und Verfahrensschritte, die jede für sich aggregationsauslösend sein können.

Proteinaggregate sind bei der Herstellung von Biologika meist unerwünschte Nebenprodukte, da sie immunogene Wirkprofile aufweisen können, weshalb bei der pharmazeutischen Wirkstoffzulassung sehr genau auf die Anwesenheit von Aggregaten geprüft wird. Obwohl der Prozess der Proteinaggregation dynamisch und unter bestimmten Bedingungen teilweise umkehrbar ist, ist es häufig ein fortschreitender Prozess.

Das Vermeiden der Aggregatbildung ist ein wichtiges Ziel bei der Herstellung von und im Umgang mit Proteinen. Deshalb müssen bereits beim Entwickeln von biologischen Verfahren biologische Systeme und Reaktionskonditionen gefunden werden, bei denen möglichst keine Aggregate entstehen.

Es ist deshalb wünschenswert, aggregationsfördernde Konditionen schnell zu identifizieren, um diese so zu optimieren, dass eine Aggregatbildung vermieden wird.

Die Notwendigkeit, das Auftreten von Proteinaggregaten zu bestimmen, besteht bereits im frühen Teil der Prozessentwicklung, nämlich der Zelllinienentwicklung und im sogenannten Upstream-Development. Hier werden z.B. viele monoklonale Zelllinien produziert, die dann auf Produktivität und Produktqualität, inklusive Aggregationsneigung untersucht werden. Dabei kommt es oft darauf an, Zelllinien oder Zellkulturbedingungen zu identifizieren, die dazu neigen aggregierte Proteine zu produzieren, und diese aus dem Entwicklungsprozess zu eliminieren. Häufig fallen in diesem Stadium der Prozessentwicklung hunderte von Proben an, die innerhalb kurzer Zeit auf Aggregation untersucht werden müssen.

Ferner fallen auch im Downstream-Development, in dem die verschiedenen Schritte der Aufreinigung des Produktes optimiert werden, viele Proben an.

Eine effektive Kontrolle bei der Herstellung und Reinigung von Proteinen sowie bei der Auswahl von Zelllinien, Hefe- oder Bakterienstämmen und Zellkulturbedingungen zur Herstellung von Proteinen kann jedoch nur dann erfolgen, wenn das Ergebnis der Kontrolle schnell und zuverlässig verfügbar ist, um kurzfristige Änderungen der Prozessparameter durchführen zu können.

Methoden für die Aggregatmessungen von Proteinen sind bekannt. Die am häufigsten eingesetzte Methode ist die Größenausschlusschromatographie (oder sizeexclusion chromatography, SEC). Bei der SEC wird eine aufgereinigte Proteinlösung auf eine stationäre Phase aufgetragen und die Proteine werden dort aufgrund ihrer unterschiedlichen Größen voneinander getrennt, und sie eluieren deshalb zu unterschiedlichen Zeitpunkten. Die Detektion der Eluate erfolgt typischerweise über die Messung der Absorption bei einer Wellenlänge von 280nm. Diese Methode erlaubt die Identifikation unterschiedlich großer Moleküle und deren Quantifizierung durch die Bestimmung der Flächen der Eluat-Peaks/Fraktionen im Chromatogramm. Für die SEC werden gewöhnlich aufgereinigte Proben verwendet, was die Messung arbeitstechnisch und zeitlich anspruchsvoll macht, und sie kann Aggregate im Größenbereich von größer als ca. 0,1µm (100 nm) nicht mehr detektieren.

Weitere Methoden zur Bestimmung von Proteinaggregaten sind die Gelelektrophorese, die Moleküle ebenfalls aufgrund ihrer Größe auftrennt, und DLS, das sogenannte "dynamic light scattering". Bei der DLS handelt es sich um eine Methode, die das Vorhandensein von Aggregaten aufgrund von Lichtstreuung der größeren Moleküle detektiert. Auch hier müssen die Proben vor Messung aufgereinigt werden und die DLS eignet sich nicht für Proteinaggregate, die eine Größe von 1 µm überschreiten.

Zur Detektion von Aggregaten werden neuerdings auch Fluoreszenzfarbstoffe eingesetzt, die so konzipiert sind, dass sie mit den hydrophoben Bereichen der aggregierten Proteine interagieren, wodurch bei Anregung eine Fluoreszenzemission ausgelöst wird. Diese Protein-Farbstoff Interaktionen reichen von physikalisch/chemischer Bindung bis zu Charge-Transfer-Mechanismen und sind z.B. in EP 2 507 319 A, WO2011/065980A3 und US2021/0009809 A1 beschrieben.

Auch das Verwenden aggregatspezifischer Fluoreszenzmarker liefert nur zuverlässige Ergebnisse, wenn die Proben vorher aufgereinigt wurden. Versuche an ungereinigten Proben führten zu nicht zufriedenstellenden Ergebnissen wie von Oshinbolu et al. in "Evaluation of fluorescent dyes to measure protein aggregation within mammalian cell culture supernatants." Journal of Chemical Technology & Biotechnology 93.3 (2018): 909-917) und Paul, Albert Jesuran, et al. in "Fluorescence dye-based detection of mAb aggregates in CHO culture supernatants." Analytical and Bioanalytical Chemistry 407.16 (2015): 4849-4856 beschrieben.

Oshinbolu et al. beschreiben, dass es nicht möglich ist, mit Sypro-Orange die Aggregation in Zellkulturüberständen zu messen. Paul et al. verwendeten die Farbstoffe Bis-ANS und ThioflavinT und kommen zu ähnlichen Ergebnissen, nämlich dass die Proteine vor Farbstoffbehandlung aufgereinigt werden müssen. Probleme machen hier besonders die im Kulturmedium und Zellüberstand vorhandenen Substanzen.

Paul, et al. in "High-throughput analysis for sub-visible mAb aggregate particles using automated fluorescence microscopy imaging", Anal. Bioanal. Chem (2017), 409, 4149-4156 beschreiben gleichfalls die Verwendung von Fluroeszenzspektroskopie unter Verwendung aggregatspezifischer Fluoreszenzmarker zum Bestimmen von Aggregaten, die alle größer sind als 1µm, im Hinblick auf deren Auftreten und Größenverteilung in aufgereinigten Proben. Paul et al. beschäftigen sich nicht mit der quantitativen Bestimmung von Aggregaten in Kulturmedium oder Zellüberstand.

Bislang ist noch kein Verfahren bekannt, mit dem man Proteinaggregate schnell und zuverlässig bestimmen kann, ohne, dass die proteinhaltige Probe aufgereinigt werden muss.

Aufgabe der vorliegenden Erfindung liegt deshalb darin, ein Verfahren bereitzustellen, mit dem effizient und schnell Proteinaggregate qualitativ und quantitativ bestimmt werden können, direkt und ohne vorherige Aufreinigung der Probe. Die Messung sollte gleichfalls einfach und schnell mit im Labor routinemäßig vorhandenen Mitteln durchzuführen sein. Die Erfindung betrifft gleichfalls die Verwendung der in WO 2015/135840 A1 beschriebenen Messkammern im erfindungsgemäßen Verfahren.

US 2010/0028935 beschreibt Mikrotiterplatten, die eine Vielzahl von Wells mit konvex geformten Böden aufweisen. Es ist vorgeschlagen, diese für mikrobiologische und enzymatische Analysen von Blut, Plasma, Serum oder Zellkulturproben zu verwenden. Diese Druckschrift beschäftigt sich nicht mit dem Auffinden von Aggregaten.

Die Erfinder haben nun das wie in den Ansprüchen definierte und in der Beschreibung beschriebene Verfahren gefunden, durch die die vorgenannten Nachteile vermieden werden.

Insbesondere lässt sich das Verfahren bei der Entwicklung von Zellkulturprozessen zur rekombinanten (technischen) Herstellung von Proteinen, insbesondere Antikörpern und bei der Entwicklung von Downstream-Prozessen vorteilhaft einsetzen.

Das Verfahren ist leicht durchzuführen und basiert auf der Messung der Differenz der Fluoreszenzemission aggregatspezifischer Fluoreszenzmarker.

Die das Zielprotein enthaltende Probe kann direkt gemessen werden, eine Aufreinigung ist nicht notwendig. Durch das erfindungsgemäße Verfahren können selbst diejenigen aggregatspezifischen Fluoreszenzmarker zur Detektion von Proteinaggregaten verwendet werden, die ansonsten nur mit gereinigten Proben verlässliche Resultate liefern (vgl. Oshinbolu (2018) und Paul (2015)).

Für das erfindungsgemäße Verfahren werden die in WO 2015/135840 A1 beschriebenen Mikrotiterplatten mit speziell ausgestatteten Messkammern verwendet. Insofern wird auf diese Druckschrift und deren Offenbarung vollumfänglich Bezug genommen. Im Gegensatz zur Offenbarung in WO 2015/135840 A1, in der Fluoreszenzfarbstoffe verwendet werden, die sowohl im ungebundenen als auch gebundenen Zustand nach Anregung fluoreszieren, werden in der vorliegenden Erfindung aggregatspezifische Fluoreszenzfarbstoffe verwendet, die, wie weiter unten beschrieben, nur - wenn sie an Aggregate gebunden sind - fluoreszieren. Diese, vorzugsweise im SBS-Format vorliegenden Mikrotiterplatten, weisen als Messkammern besonders ausgestaltete Näpfchen (Wells) auf. Sie beinhalten eine von der Basis aus nach oben sich mindestens geringfügig verjüngende Erhebung, deren Grundfläche/dessen Querschnitt eine beliebige Form aufweist und das von der Basis der Vorrichtung abgewandte Ende der Erhebung ist spitz, flach oder konvex geformt, so dass sich dort keine Versuchskomponenten, insbesondere keine Partikel ablagern und den Strahlengang für die spätere Fluoreszenzmessung nicht stören. Vorteilhafterweise weist das obere Ende der Erhebung einen Durchmesser von kleiner 50 µm auf.

Die das Zielprotein enthaltende Probe wird nach Entnahme ohne weitere Behandlung portionsweise in die Wells der vorgenannten speziell ausgestatteten Mikrotiterplatte gegeben, in denen die weiteren Versuchskomponenten bereits vorhanden sind oder zugegeben werden. Versuchskomponenten sind mindestens ein aggregatspezifischer Fluoreszenzfarbstoff, ggf. Puffer und ggf. funktionalisierte Partikel.

Für das erfindungsgemäße Verfahren werden von der Zielprotein-enthaltenden Probe gleich große Portionen entnommen. Die geringste Anzahl solcher Portionen ist zwei. Die Anzahl der Portionen hängt von der Anzahl an Messpunkten pro Probe ab, die man erhalten möchte, um bspw. die Messabweichung zu bestimmen.

Werden zwei Portionen der proteinhaltigen Probe entnommen, so wird zu jeder dieser Portionen ein aggregatspezifischer Fluoreszenzfarbstoff gegeben. Es können auch mehr als nur ein aggregatspezifischer Fluoreszenzfarbstoff zugegeben werden. In einer dieser Portionen sind als weitere Versuchskomponenten funktionalisierte Partikel anwesend.

Werden von der proteinhaltigen Probe mehr als zwei Portionen entnommen, so ist es vorteilhaft, eine gerade Anzahl an Portionen zu entnehmen, diese mit den Versuchskomponenten zu mischen und die Hälfte dieser Mischungen zusätzlich mit funktionalisierten Partikeln zu versetzen. Es entsteht eine Mischung mit und eine andere Mischung ohne funktionalisierten Partikeln. Wichtig für die Ermittlung der Differenz der Fluoreszenzemission ist, dass mindestens eine der Portionen nicht mit funktionalisierten Partikeln behandelt wurde. Statt des paarweisen Vergleichs ist auch denkbar, dass die mit Partikeln versetzten Proben jeweils mit nur einer nicht mit Partikeln behandelter Probe verglichen und ausgewertet werden.

Nach Portionieren der proteinhaltigen Probelösung und Vermischen mit den Versuchskomponenten werden die Probeportionen, gewöhnlich bei Raumtemperatur und unter Verwendung eines sogenannten Schüttlers, gemischt.

Die Mischung, die eine Portion der Probe, aggregatspezifischen Fluoreszenzfarbstoff und funktionalisierte Partikel beinhaltet wird nachfolgend PP-A genannt und die andere Mischung, beinhaltend eine Portion der Probe und aggregatspezifischen Fluoreszenzfarbstoff wird nachfolgend PP-B genannt.

PP-A und PP-B enthalten, mit Ausnahme der An- oder Abwesenheit der funktionalisierten Partikel, die gleiche Menge an Probe, gleiche Menge und Art des aggregatspezifischen Fluoreszenzfarbstoffes und ggf. die gleiche Menge und Art weiterer Versuchskomponenten, z.B. Puffer. PP-A und PP-B werden stets gleichbehandelt und es ist von Vorteil, wenn die Mischungen PP-A und PP-B in den Wells der gleichen Mikrotiterplatte hergestellt werden.

Für das Gelingen des Verfahrens ist die Mischreihenfolge unerheblich. Es kann jedoch für die Effizienz des Verfahrens vorteilhaft sein, wenn für die Herstellung der Mischung PP-A bereits mit funktionalisierten Partikeln beladene Wells verwendet werden.

Das Verwenden der besonders ausgestatteten Mikrotiterplatte hat den Vorteil, dass nach Mischen der Probeportionen mit den Versuchskomponenten und Absetzen der funktionalisierten Partikel die Mischungen direkt und ohne weitere Behandlung (bspw. Aliquotieren von Messlösungen und Überführen dieser in Messgefäße (Küvetten oder für die Fluoreszenzmessung geeignete Mikrotiterplatten) der Fluoreszenzmessung zugeführt werden können.

Bevorzugte erfindungsgemäße Mikrotiterplatten sind solche im SBS-Format mit 384 Näpfchen (Wells), die als erfindungsgemäße Messkammern ausgestaltet sind, in denen die Erhebung (in WO 2015/135840 A1 Strukturelement genannt) dergestalt geformt ist, dass deren Grundfläche mindestens 50 % der Bodenfläche einer Messkammer bzw. des Wells beansprucht. Vorzugsweise besitzt die Erhebung eine quadratische Grundfläche, verjüngt sich (zumindest geringfügig) nach oben und besitzt eine Form, die als vierseitige Pyramide ausgestaltet ist. Das obere Ende läuft vorzugsweise spitz zu. Die Höhe der Erhebung beträgt mindestens 10 % und maximal 50 % der Höhe der Meßkammer bzw. des Wells, bevorzugt mindestens 15 % und maximal 30 %. Der Boden der Messkammer bzw. des Wells ist bis auf die Grundfläche der Erhebung lichtundurchlässig. Die Erhebung hingegen ist lichtdurchlässig und bildet ein Messfenster das, wie in WO 2015/135840 A1 detailliert beschrieben, zur Messung der Fluoreszenz-Emission verwendet wird.

Die Herstellung solcher Mikrotiterplatten erfolgt insbesondere dadurch, dass käuflich erhältliche Mikrotiterplatten verwendet werden, deren Boden durch eine lichtdurchlässige (transparente) und nicht-fluoreszierende Folie (z. B. aus Polypropylen bestehend), in die die entsprechenden Erhebungen in der dem SBS Format entsprechenden Anordnung eingeprägt sind, ersetzt ist. Die geforderte Lichtundurchlässigkeit des Bodens, mit Ausnahme der Grundfläche der Erhebung, wird durch das Aufbringen von dunkler, vorzugsweise schwarzer Farbe erreicht.

Bzgl. **Messfenster** wird auf die Beschreibung in WO 2015/135840 A1 verwiesen und diesbezüglich wird auf sie vollumfänglich Bezug genommen. Zur Fluoreszenzmessung wird die Messkammer oder die erfindungsgemäße Mikrotiterplatte von unten mit Anregungslicht bestrahlt, dass dann über die Erhebung in die Probe eingestrahlt wird. Für das Auslesen des Fluoreszenzsignals können gewöhnliche Fluoreszenzreader verwendet werden.

In einer Ausführungsform der Erfindung wird im erfindungsgemäßen Verfahren eine mit den erfindungsgemäßen Messkammern ausgestattete Mikrotiterplatte verwendet, die bereits mindestens eingetrocknete funktionalisierte Partikel enthält. Solche Platten werden hergestellt, indem eine Suspension mit einer definierten Menge an funktionalisierten Partikeln in die Wells der Platten eingebracht wird und bei 35 °C getrocknet werden. In einer Ausführungsform werden maximal 50 % der Wells mit Partikeln belegt, während die übrigen Wells keine Partikel enthalten.

Werden Platten mit eingetrockneten funktionalisierten Partikeln verwendet, so müssen diese Partikel vor Zugabe der Probelösung rekonstituiert werden. Hierfür reicht die Portion der Probe aus.

Erfindungsgemäß bevorzugt verwendbare Mikrotiterplatten sind unter dem Handelsnamen PAIAplate 384 von der Firma PAIA Biotech GmbH erhältlich.

Zielproteine, d. h. diejenigen Proteine, deren Aggregationszustand ermittelt werden soll, können sämtliche isolierte Proteine sein. Wirtschaftlich interessante Proteine sind vor allem Biologika, insbesondere Antikörper und davon abgeleiteten Moleküle, wie Fc-Fusionsproteine und bi-, tri- oder tetraspezifische Antikörperformate.

Die Schnelligkeit und die unkomplizierte Durchführung des Verfahrens ist auch vorteilhaft bei der Medienentwicklung im Rahmen der Zelllinienentwicklung, bei der das Identifizieren der richtigen Zelllinie und das Herausfinden der passenden Kulturbedingungen von großer Bedeutung ist. Denn nur die richtigen Zelllinien, die in optimalen Kulturbedingungen gehalten werden, produzieren große Mengen an Proteinen in guter Qualität bei geringem oder keinem Auftreten von Proteinaggregaten.

Der Zielorganismus, in dem das Protein hergestellt werden soll, muss genetisch verändert werden, damit er das ihm fremde Protein herstellen kann. Dazu wird u.a. die Gensequenz, die für das Zielprotein codiert und weitere für die Produktion des Zielproteins wichtige Gensequenzen in den Zielorganismus gebracht (Transfektion bzw. Transformation). Dieser Prozess führt häufig zu einer zufälligen Integration der Ziel-DNA und zu vielen genetisch unterschiedlichen Zelllinien und Bakterien- oder Hefestämmen, die unterschiedlich gut für die Produktion des Zielproteins geeignet sind, weil z.B. das Wachstum gehemmt wird oder weil das Zielprotein nicht effizient hergestellt werden kann. Die Selektion der am besten geeigneten Zelllinien oder Bakterien- oder Hefestämme ist demnach ein wichtiger Teil der Prozessentwicklung.

Gleiches gilt für das Überwachen der zeitlichen Entwicklung der Produktqualität während eines Reaktorlaufs, beispielsweise wenn es darum geht, die Fütterungsstrategie (feeding strategy) für die Zellkultur zu optimieren oder es um die Optimierung der Kulturbedingungen (Zusammensetzung des Nährmediums, die Temperatur, der pH-Wert, die Zufuhr von Sauerstoff und weiteren Zusätzen, wie Vitamine, Aminosäuren und Zucker) geht. Auch hier sind die Schnelligkeit und die unkomplizierte Durchführung des Verfahrens zur Bestimmung der Proteinaggregation von großem Vorteil.

Das vorliegende Verfahren ist besonders bei der Herstellung von pharmazeutisch wirksamen Biologika, die in unterschiedlichen Expressionssystemen hergestellt werden, nützlich. Beispiele für solche Expressionssysteme sind Zellkultursysteme, in denen tierische, menschliche oder pflanzliche Zellen vermehrt und benutzt werden, um Proteine außerhalb des Organismus herzustellen. Zelllinien, die in solchen Zellkultursystemen Verwendung finden sind beispielsweise CHO-Zelllinien (Chinese Ovarian Hamster), menschliche HEK-Zelllinien (Human Embryonic Kidney), Zelllinien aus der Maus, aus Insekten (z.B. Sf-9 oder Sf-21) sowie aus Pflanzen, z.B. aus der Mais- oder Tabakpflanze. Alternative Expressionssysteme sind bakterielle Systeme, wie e.coli-System (*Escherichia coli*), Systeme basierend auf Hefezellen, wie *pichia pastoris* oder *saccharomyces cerevisiae*, sowie Systeme basierend auf Pilzen (z.B. *aspergillus niger*)*.*

Im Rahmen der biologischen Prozessentwicklung wird die Anzahl der Zelllinien sukzessive verringert, ineffiziente Zelllinien eliminiert und das Volumen, in dem kultiviert wird, kontinuierlich gesteigert (sogenanntes Upscaling). Gleichzeitig werden die Prozesse in den Bioreaktoren immer engmaschiger (z. B. auf Sauerstoffgehalt, pH-Wert, Stoffwechselprodukte und Zellwachstum) kontrolliert, um die optimalen Bedingungen für das finale Reaktorvolumen zu ermitteln. Zur Optimierung werden dann entsprechend auch unterschiedlich zusammengesetzte Nährmedien verwendet und unterschiedlichste Zusätze wie Vitamine, Aminosäuren, Salze, Spurenelemente, Proteine und Peptide, Fettsäuren, Lipide, und Zucker daraufhin getestet, ob sie eine Verbesserung der Zellgesundheit und des Zellwachstums, sowie der Ausbeute und der Qualität des Produktes zur Folge haben. Hierbei können Hunderte von Proben entstehen, in denen das Produkt charakterisiert und auf den Aggregationszustand untersucht werden muss.

Das erfindungsgemäße Verfahren ist besonders für die Verwendung bei der Entwicklung von Expressionssystemen, insbesondere Zellkultursystemen für die Herstellung von Biologika, insbesondere therapeutisch wirksamen Antikörpern geeignet.

Das erfindungsgemäße Verfahren ist gleichermaßen besonders für die Verwendung bei der Zelllinienentwicklung, insbesondere dem Auffinden und Optimieren von Kulturbedingungen für die Herstellung von Biologika, wie therapeutischen Antikörper etc., in großer Menge und guter Qualität geeignet.

Das erfindungsgemäße Verfahren ist weiterhin besonders für die Verwendung zur Prozesskontrolle bei der Herstellung von Biologika, insbesondere therapeutisch wirksamen Antikörpern geeignet, insbesondere zur Überwachung der Produktqualität während der Herstellung durch ein Expressionssystem (auch Reaktorlauf genannt).

Im Verfahren werden spezielle Fluoreszenzfarbstoffe, die in der Lage sind, Aggregate zu detektieren, verwendet, wie z.B. solche aggregatspezifischen Fluoreszenzfarbstoffe (auch Fluoreszenzmarker genannt) die z.B. in WO2011/065980A3 und US2021/0009809 A1 EP2507319 A2 und WO 96/36882 A beschrieben sind. Diese Fluoreszenzfarbstoffe können allein, in Kombination oder als eine mehrere Farbstoffe enthaltende Zusammensetzung verwendet werden. Der Fachmann findet ohne großen technischen Aufwand heraus, welche aggregatspezifischen Fluoreszenzfarbstoffe für das erfindungsgemäße Verfahren besonders geeignet sind. Diese Fluoreszenzfarbstoffe zeigen im ungebundenen Zustand bei Anregung nur vernachlässigbare Fluoreszenzemission. Erst bei Bindung an Aggregate können sie zur Fluoreszenz angeregt werden.

Aggregatspezifische Fluoreszenzmarker sind käuflich erhältlich, wie z.B. Aggregatspezifische Fluoreszenzfarbstoffe aus den folgenden Klassen:
- molekulare Rotoren aus der Klasse der substituierten Julolidine, z.B. 9-(2,2-Dicyanovinyl)julolidine (DCVJ) und 9-(2-Carboxy-2-cyanovinyl)julolidine (CCVJ);
- substituierte Naphthalene oder Bis-Naphthalene, z.B. 8-Anilino-1-naphthalenesulfonic acid (ANS) und 4,4'-Dianilino-1,1'-binaphthyl-5,5'-disulfonic acid dipotassium salt (Bis-ANS); Merocyanine, wie N-(3-Sulfopropyl)-4-(p-dihexylaminostyryl)pyridinium sowie wie in WO 96/36882 A beschrieben, insbesondere solche mit den nachstehenden Formeln 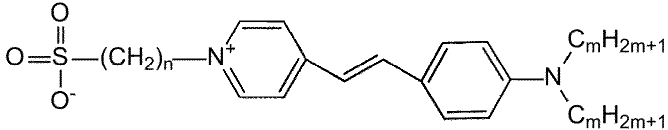 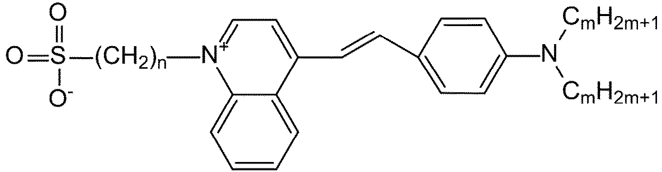 wobei in vorgenannten Formeln n für 3 oder 4 steht und m für eine ganze Zahl von 2 bis 10 steht. Einige der vorgenannten Fluoreszenzfarbstoffe sind unter den folgenden Handelsnamen erhältlich Sypro^{®}-Orange, Sypro^{®}-Red oder ProLite-Orange; diese Farbstoffe sind bevorzugt verwendbar.
- Aggregatspezifische Farbstoffe wie in EP 2 507 319 A beschrieben, insbesondere solche mit den nachfolgenden Formeln (I) - (VII), in denen X für folgende Ionen stehen kann: Perchlorat (ClO₄⁻), Sulfat (SO₄²⁻), Alkansulfonate, Arylsulfonate, Phosphate, Tosylate, Mesylate, Tetrafluoroborate, sowie Halogenionen wie Chlorid, Iodid, Bromid oder Fluorid, sowie beliebige Mischungen dieser Anionen. 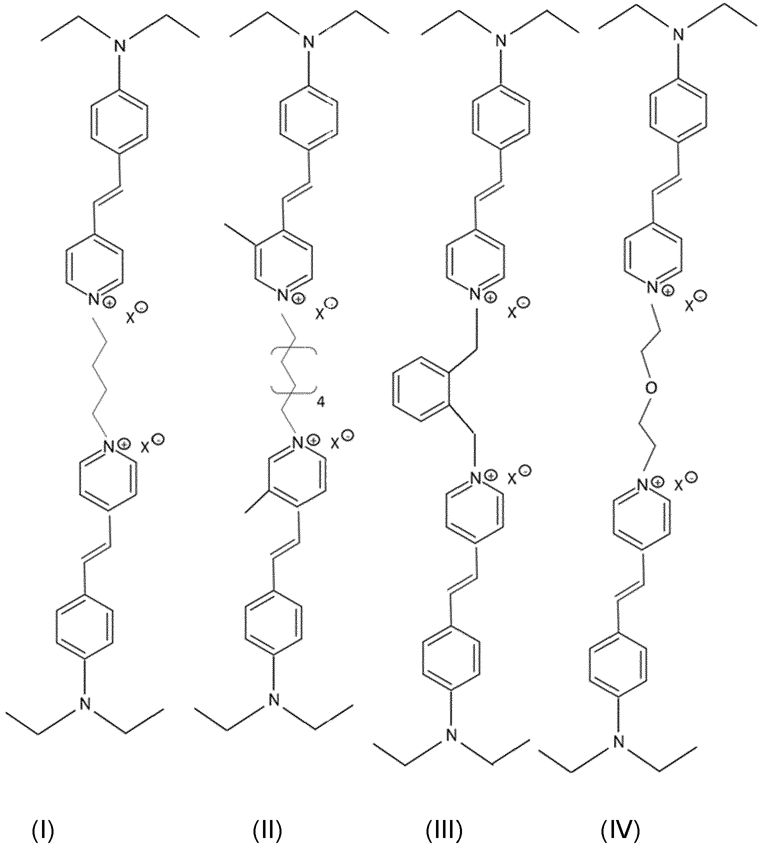 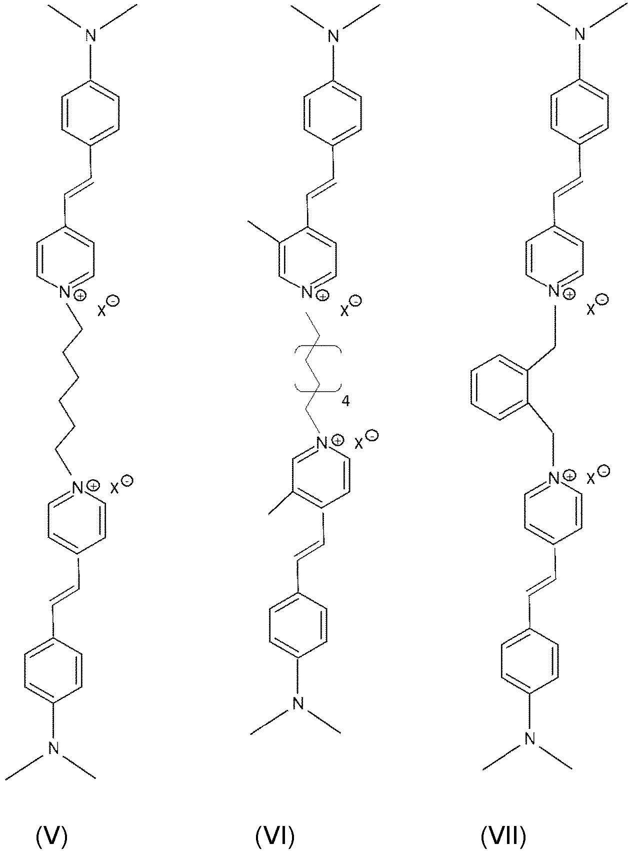
- Benzothiazole, wie solche, die unter dem Handelsnahmen Thioflavin T^{®} erhältlich sind;
- Phenoxazine, wie solche, die unter dem Handelsnamen Nilrot oder auch Nilblau Oxazon erhältlich sind;
- Sulfonierte Azo-Fluoreszenzfarbstoffe, wie solche, die unter dem Handelsnamen CongoRed oder Chrysamine-G, ein Derivat von CongoRed erhältlich sind; oder
- 2-[4-(Dimethylamino)styryl]-1-methylpyridinium iodide (DASPMI oder 2-Di-1-ASP), N-(3-Sulfopropyl)-4-(p-dihexylaminostyryl)pyridinium (z.B. von Interchim erhältlich).

Im erfindungsgemäßen Verfahren werden die funktionalisierten Partikel so ausgewählt, dass sie das oder die Zielproteine binden können, unabhängig davon, ob die Proteine monomer oder oligomer als Aggregate vorliegen. Der Einsatz der funktionalisierten Partikel im erfindungsgemäßen Verfahren bewirkt die Immobilisierung und Absetzen des Zielproteins am Boden der Messkammer.

Verwendbare funktionalisierte Partikel sind insbesondere solche wie in WO2015/135840 A1 beschrieben. Z.B. Partikel, die mit einem oder mehreren der nachfolgend genannten Proteine oder Chemikalien funktionalisiert sind, nämlich Protein A, Protein L oder Protein G, StrepTactin, Streptavidin, Avidin oder Neutravidin, die ggf. mit biotinylierten Affinitätsliganden komplexiert sind.

Vorgenannte funktionalisierte Partikel sind gängige Reagenzien in der biochemischen Praxis und werden oft für die Aufreinigung von Proteinen verwendet, z.B. als Säulenmaterial für analytische HPLC-Säulen oder als Säulenmaterial im großtechnischen Maßstab.

Beispiele für erfindungsgemäß einsetzbare funktionalisierten Partikel sind Protein A-Partikel der Firma Repligen, die unter dem Handelsnahmen "CaptivA^{™}" vertrieben werden (z.B. CaptivA PriMAB^{™}). Hierbei handelt es sich um quervernetzte Agarose Partikel mit darauf immobilisiertem rekombinantem nativen Staphylococcus Protein A (rSPA) aus E.coli. Weitere Beispiele für Protein-A Partikel sind Affi-Gel^{®} Protein A-resin oder Affi-Prep^{®} Protein A-resin der Firma Bio-Rad, Poros Mab capture A select affinity chromatography resin von ThermoFisher, Ultra-linked rProtein A resin von Sino Biological Inc., Immobilized Recombinant Protein A Resin von Generon, ProteinA Agarose von Sigma Aldrich, Mabselect protein A resins von GE Healthcare, ProSep^{®} Ultra Plus Chromatography Resin von Merck-Millipore, Praesto AP, APc or Praesto Jetted A50 von Purolite, TOYOPEARL^{®} AF-rProtein A HC-650F von Tosoh Biosciences.

Bevorzugt weisen die erfindungsgemäß verwendbaren Partikel mittlere Durchmesser im Bereich von etwa 20 bis 200 µm auf. Erfindungsgemäß bevorzugte Partikel weisen mittlere Durchmesser im Bereich von 20 bis 80 µm, 50 bis 100 µm, 40 bis 200 µm, 50 bis 150 µm und 50 bis 200 µm auf.

Das Portionieren geschieht manuell oder automatisch mit einem automatisierten Pipettierroboter (Liquidhandler).

Der Vorteil des erfindungsgemäßen Verfahrens besteht insbesondere darin, dass viele Proben in relativ kurzer Zeit auf das Vorhandensein von Aggregaten untersucht werden können. Aufgrund der einfachen und, wenn gewünscht, automatisierten Durchführung wird gewöhnlich bereits nach weniger als 100 Minuten ein Messergebnis für mehr als 100 Proben gleichzeitig erhalten.

Als Fluoreszenzreader können beispielsweise folgende Geräte erfindungsgemäß verwendet werden: Die Geräte der Serie Spectramax der Fa. Molecular Devices, die Systeme, der Fa. Tecan (Safire, der Infinite-Serie, oder SPARK), Reader der Fa. BMG Labtech (Omega, Clariostar, Pherastar) sowie Fluoreszenzmikroskope, z.B. der Fa. SynenTec (Cellavista und NyONE).

Die Erfindung wird anhand der nachfolgend in den Figuren abgebildeten und weiter unten beschriebenen Beispielen erläutert, ohne die Erfindung hierauf einzuschränken.

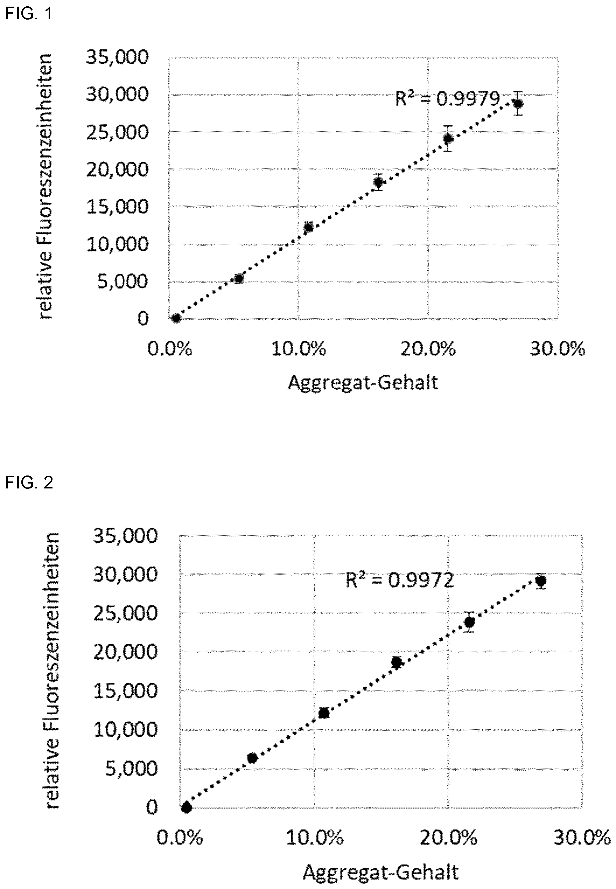

**Fig. 1** - Grafische Darstellung der in Beispiel 1 ermittelten Messwerte, mit Angabe der Standardabweichung basierend auf 6 Messungen pro Aggregatgehalts. Auf der y-Achse ist die Differenz der gemessenen Fluoreszenzintensitäten aufgetragen (gemessene Emission aus PP-B minus gemessener Emission aus PP-A) und auf der x-Achse der Aggregatgehalt der verwendeten Probelösung.
**Fig. 2** - Grafische Darstellung der in Beispiel 2 ermittelten Messwerte, mit Angabe der Standardabweichung basierend auf 6 Messungen pro Aggregatgehalts. Auf der y-Achse ist die Differenz der gemessenen Fluoreszenzintensitäten aufgetragen (gemessene Emission aus PP-B minus gemessener Emission PP-A) und auf der x-Achse der Aggregatgehalt der verwendeten Probelösung.

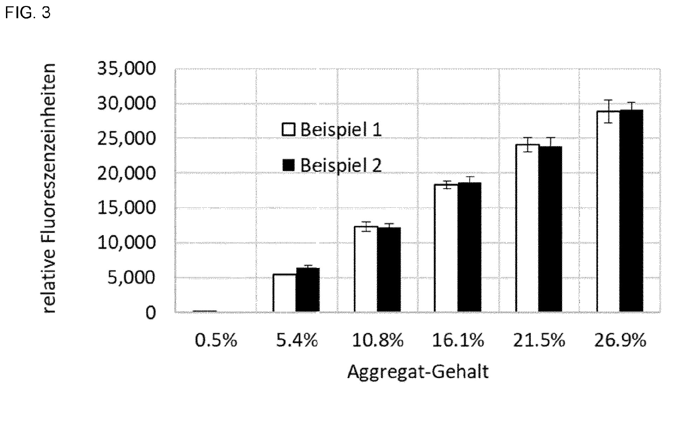

**Fig. 3** - Grafische Gegenüberstellung der in den Beispielen 1 und 2 erhaltenen Werte.

### Beispiel 1

Erstellen einer Kalibrationsgerade mit aggregierten Antikörpern in einer wässrigen Pufferlösung:
Für die Aggregationsmessung wird Trastuzumab (ein Antikörper des Typs IgG1) der Firma Roche verwendet und zum Aggregieren gebracht. Die Aggregation des Antikörpers erfolgt, in dem Trastuzumab in Puffer einer 15-minütigen Temperaturbehandlung bei 75 °C unterzogen wird. Während der Temperaturbehandlung wird die Lösung geschüttelt. Der Aggregationsgrad der erhaltenen Trastuzumab-Probe wird durch SEC bestimmt.

Als Fluoreszenzmarker wird eine verdünnte Lösung von SYPRO-Orange verwendet. Dazu wurde das 5000x-SYPRO-Orange-Konzentrat in DMSO der Fa. ThermoFisher (Art.-No. S6650) mit 1xPBS Puffer auf eine Konzentration von 55x verdünnt.

Wenn nichts anderes erwähnt ist, wird eine phosphatgepufferte Salzlösung, ein sogenannter PBS-Puffer, verwendet, der auf einen pH-Wert von 7,4 eingestellt ist. Der PBS Puffer enthält 137 mM NaCl, 2,7 mM KCl und 12 mM Phosphate.

Als Reaktions- und Meßgefäße werden die Wells (Näpfchen) einer PAIAplate 384 erhältlich von PAIA Biotech GmbH, die wie in WO 2015/135840 A1 herstellbar ist, verwendet.

Die Mischungen werden in den Wells der 384-Well PAIAplate hergestellt. Das Arbeitsvolumen eines Wells beträgt 15µL-110µL.

Als funktionalisierte Partikel werden CaptivA-Beads der Firma Repligen mit einem durchschnittlichen Durchmesser von ca. 90 µm verwendet. Diese Partikel sind mit Protein-A funktionalisiert und käuflich erhältlich.

Zur Vorbereitung der Wells und der Platte wird in die entsprechende Anzahl an Wells, CaptivA Protein A Partikel in Puffer pipettiert und in die entsprechende andere Anzahl an Wells wird Puffer eingefüllt. Die Platte wird für 48 Stunden bei 35 °C aufbewahrt, damit das Wasser aus dem Puffer verdampft und die Partikel eintrocknen.

Für die Messreihe werden die wie oben beschrieben hergestellten teilaggregierten Trastuzumab-Proben mit nicht-aggregiertem Trastuzumab in vordefinierten Verhältnissen gemischt, so dass 6 verschiedene Probelösungen mit Aggregatgehalten von 27%, 22%, 16%, 11%, 5%, und 1% erhalten werden. Die Gesamtkonzentration von Trastuzumab beträgt jeweils 0,5 mg/mL.

Von jeder dieser 6 Probelösungen werden jeweils 40 µl in sechs Wells A, in der die Mischung PP-A hergestellt wird, die Partikel beinhalten und in sechs Wells B, in der die Mischung PP-B hergestellt wird, und die keine Partikel beinhalten, pipettiert und jeweils 20 µL der verdünnten 55x-SYPRO-Orange Lösung dazu gegeben. Hiermit werden pro Probelösung, die einen spezifischen Aggregatgehalt aufweisen, sechs Werte erhalten.

Die Mikrotiterplatte wird auf einem Schüttler (Bioshake von QInstruments) 90 Minuten lang bei Raumtemperatur und 1400 rpm geschüttelt. Danach wird die Mikrotiterplatte kurz zentrifugiert damit sich die Partikel in den Wells A absetzen. Die Platte wird dann der Fluoreszenzmessung zugeführt.

Die Fluoreszenzintensitäten in den Wells des Types A und in den Wells des Types B werden von unten, d.h. durch bottom reading, in einem Tecan Safire Fluoreszenzplattenreader bei einer Anregungswellenlänge von 480 nm und einer Emissionswellenlänge von 580 nm bestimmt.

Es wird die Differenz der Fluoreszenzintensitäten aus den Wells B und den Wells A als Maß für den Aggregationszustand ermittelt. Je höher der Differenzwert ist, desto mehr Aggregate sind in der Probe enthalten. Gegenübergestellt werden immer die Werte einer Mischung PP-A und einer Mischung PP-B.

Zur Kalibrierung der Messung, z.B. weil die Aggregate quantitativ festgestellt werden sollen, können die erhaltenen Werte der Fluoreszenzintensität gegen die zuvor eingestellten Aggregatkonzentrationen aufgetragen werden. Die Werte können z.B. mit einer linearen Funktion gefittet werden, um so eine Kalibrationsfunktion zu erhalten. Die entsprechende Kalibrationsgerade ist in Fig.1 dargestellt. Der R²-Wert beträgt 0,9979. Die Werte basieren auf 6 Messungen pro Aggregatgehalt.

### Beispiel 2

### Erstellen einer Kalibrationsgeraden mit aggregierten Antikörpern in Zellkulturüberstand

Es wird wie in Beispiel 1 beschrieben vorgegangen, mit dem Unterschied, dass statt PBS Puffer nun CHO-Zellkulturüberstand, hier auch als CCS bezeichnet (cell culture supernatant), verwendet wurde. Die CHO-Zellkulturüberstand stammt von einem Expressionssystem zur Herstellung von Antikörpern. Die Zusammensetzung ist nicht bekannt, jedoch ist davon auszugehen, dass sie Puffersubstanzen, biologische Substanzen, die von der Kultivierung stammen, Nährstoffe und Salze enthalten. Die entsprechende Kalibrationsgerade ist in Fig. 2 dargestellt. Der R²-Wert beträgt 0,9972. Die Werte basieren auf 6 Messungen pro Aggregatgehalt.

Die in den Beispielen 1 und 2 ermittelten Werte wurden miteinander verglichen. Die Daten sind in Tabelle 1 wiedergegeben.

Die gegenübergestellten Werte sind in folgender Tabelle wiedergegeben und in Fig. 3 dargestellt:

| Trastuzumab-Aggregatgehalt bei einer Trastuzumabkonzentration von 0,5 mg/mL | Relative Fluoreszenzeinheiten | |
|---|---|---|
| | Beispiel 1 | Beispiel 2 |
| 1% | 61 | 1 |
| 5% | 5426 | 6467 |
| 11% | 12304 | 12167 |
| 16% | 18276 | 18703 |
| 22% | 24122 | 23871 |
| 27% | 28841 | 29146 |

Es konnte festgestellt werden, dass die Messungen, trotz stark abweichenden Mediums (Puffer in Beispiel 1 und Zellkulturüberstand in Beispiel 2) sehr gut miteinander vergleichbar sind, so dass das Verfahren flexibel und unabhängig von der Reinheit der Probe durchgeführt werden kann.

## Patentansprüche

1. Verfahren zur qualitativen und quantitativen Bestimmung von Proteinaggregaten unter Verwendung von aggregatspezifischen Fluoreszenzfarbstoffen, umfassend folgende Schritte:
a. Portionieren der Probe in mindestens zwei gleich große Portionen PP-A und PP-B und Überführen der Portionen in speziell ausgestaltete Wells, enthaltend eine Messkammer, beinhaltend eine sich nach oben verjüngende Erhebung deren Grundfläche mindestens 50 % der Bodenfläche des Wells beansprucht, wobei die Höhe der Erhebung mindestens 10 % und maximal 50 % der Höhe der Messkammer beansprucht, wobei der Boden des Wells bis auf die Grundfläche der Erhebung lichtundurchlässig ist, während die Erhebung lichtdurchlässig ist und das Messfenster für die Fluoreszenzmessung bildet,
b. Herstellen einer Mischung umfassend die Portion PP-A, mindestens einen aggregatspezifischen Fluoreszenzmarker und funktionalisierte Partikel, die das oder die Zielproteine binden können, unabhängig davon, ob die Proteine monomer oder oligomer als Aggregate vorliegen, in einem Well A und Herstellen derselben Mischung in einen weiteren Mischgefäß unter Verwendung der Portion PP-B, jedoch ohne funktionalisierte Partikel;
c. Mischen beider Mischungen und Absetzen der funktionalisierten Partikel;
d. Messen der Fluoreszenzemission der Mischungen PP-A und PP-B;
e. Bilden der Differenz der gemessenen Emission der Mischung PP-B minus der der Mischung PP-A zur Bestimmung der Proteinaggregation.

2. Verfahren nach dem vorgehenden Anspruch, **dadurch gekennzeichnet, dass** die funktionalisierten Partikel mit einem oder mehreren der nachfolgend genannten Proteine oder Chemikalien funktionalisiert sind, nämlich Protein A, Protein L oder Protein G, StrepTactin, Streptavidin, Avidin oder Neutravidin, die ggf. mit biotinylierten Affinitätsliganden komplexiert sind..

3. Verfahren nach einem der vorgehenden Ansprüche, **dadurch gekennzeichnet, dass** die funktionalisierten Partikel noch vor Schritt a in dem zur Aufnahme der Portion PP-A bestimmten Well vorhanden sind.

4. Verfahren nach einem der vorhergehenden Ansprüche, **dadurch gekennzeichnet, dass** die Proteinaggregate anhand von Eichkurven quantifiziert werden.

5. Verfahren nach einem der vorhergehenden Ansprüche, **dadurch gekennzeichnet, dass** die aggregatspezifischen Fluoreszenzmarker ausgewählt sind unter folgenden Fluoreszenzfarbstoffklassen:
- molekulare Rotoren aus der Klasse der substituierten Julolidine, 9-(2,2-Dicyanovinyl)julolidine (DCVJ) und 9-(2-Carboxy-2-cyanovinyl)julolidine (CCVJ);
- substituierte Naphthalene oder Bis-Naphthalene, 8-Anilino-1-naphthalenesulfonic acid (ANS) und 4,4'-Dianilino-1,1'-binaphthyl-5,5'-disulfonic acid dipotassium salt (Bis-ANS);
- Merocyanine, wie N-(3-Sulfopropyl)-4-(p-dihexylaminostyryl)pyridinium sowie Moleküle mit den nachstehenden Formeln 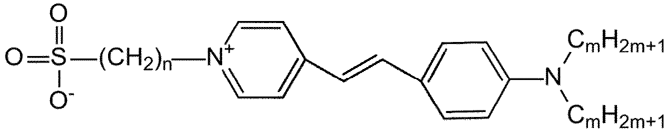 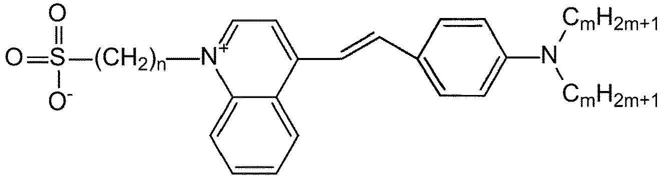 wobei n für 3 oder 4 steht und m für eine ganze Zahl von 2 bis 10 steht;
- Moleküle mit einer der Formeln (I), (II), (III), (IV), (V), (VI) oder (VII) 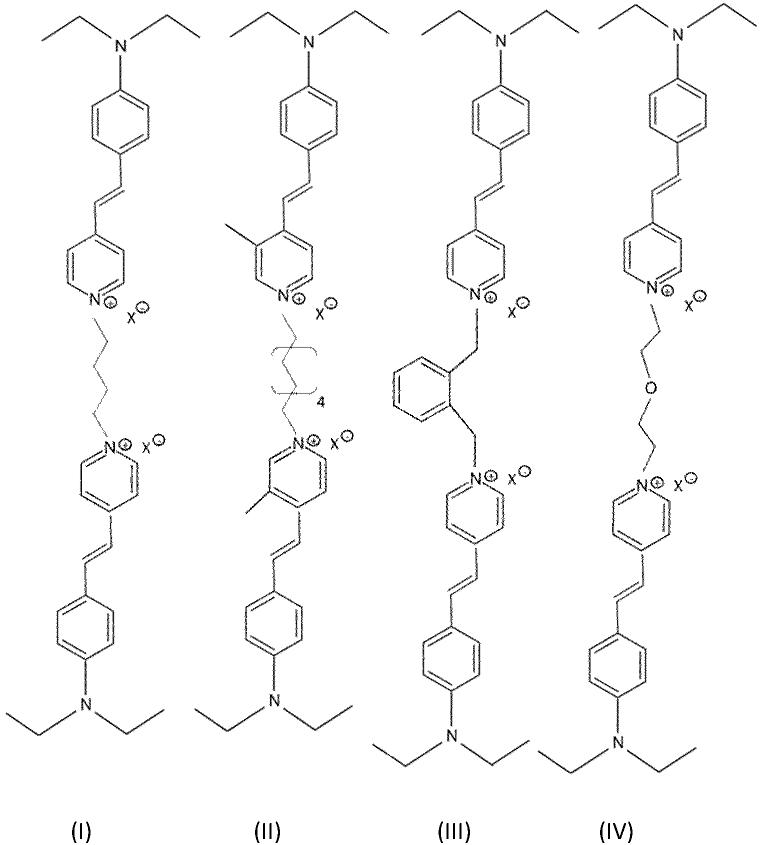 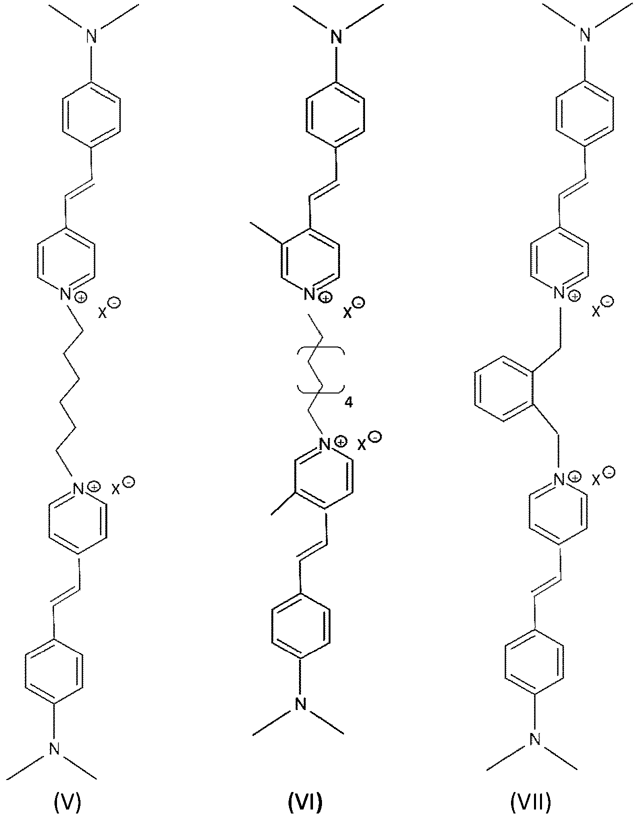 in denen X⁻ für folgende Ionen stehen kann: Perchlorat (ClO₄⁻), Sulfat (SO₄²⁻), Alkansulfonate, Arylsulfonate, Phosphate, Tosylate, Mesylate, Tetrafluoroborate, sowie Halogenionen wie Chlorid, Iodid, Bromid oder Fluorid, sowie beliebige Mischungen dieser Anionen
- Benzothiazole, ThioflavinT ;
- Phenoxazine oder -oxazone, Nilrot oder Nilblau;
- Sulfonierte Azo-Fluoreszenzfarbstoffe oder Derivate davon ,CongoRed oder Chrysamine-G; und
- 2-[4-(Dimethylamino)styryl]-1-methylpyridiniumiodid (DASPMI oder 2-Di-1-ASP), N-(3-Sulfopropyl)-4-(p-dihexylaminostyryl)pyridinium.

6. Verfahren nach einem der vorhergehenden Ansprüche, **dadurch gekennzeichnet, dass** die funktionalisierten Partikel einen mittleren Durchmesser im Bereich von etwa 20 bis 200 µm aufweisen und mit einem oder mehreren der nachfolgend genannten Proteine oder Chemikalien funktionalisiert sind, nämlich Protein A, Protein L oder Protein G, StrepTactin, Streptavidin, Avidin oder Neutravidin, die ggf. mit biotinylierten Affinitätsliganden komplexiert sind.

7. Verfahren nach einem der vorgehenden Ansprüche zur Reaktionskontrolle bei der Herstellung pharmazeutisch wirksamer Proteine.

8. Verfahren nach einem der vorhergehenden Ansprüche 1 bis 7 zur Verwendung bei der Entwicklung von Expressionssystemen, insbesondere Zellkultursystemen für die Herstellung von Biologika, insbesondere therapeutisch wirksamen Antikörpern.

9. Verfahren nach einem der vorhergehenden Ansprüche 1 bis 7, zur Verwendung bei der Zelllinienentwicklung, insbesondere dem Auffinden und Optimieren von Kulturbedingungen für die Herstellung von Biologika, insbesondere therapeutisch wirksamen Antikörpern.

10. Verfahren nach einem der vorhergehenden Ansprüche 1 bis 7, zur Prozesskontrolle bei der Herstellung von Biologika, insbesondere therapeutisch wirksamen Antikörpern geeignet, insbesondere zur Überwachung der Produktqualität während der Herstellung durch ein Expressionssystem.

## Claims

1. A method for the qualitative and quantitative determination of protein aggregates using aggregate-specific fluorescent dyes, comprising the following steps:
a. Portioning the sample into at least two equally sized portions, PP-A and PP-B, and transferring the portions into specially designed wells, containing a measurement chamber, including an upwardly tapering elevation whose base area covers at least 50% of the bottom area of the well, wherein the height of the elevation is at least 10% and at most 50% of the height of the measurement chamber, wherein the bottom of the well is opaque except for the base area of the elevation, while the elevation is transparent and forms the measurement window for the fluorescence measurement,
b. Preparing a mixture comprising the PP-A portion, at least one aggregate-specific fluorescent marker, and functionalized particles capable of binding the target protein(s), regardless of whether the proteins are present as monomers, oligomers or aggregates, in a well A, and preparing the same mixture in a further mixing vessel using the PP-B portion, but without functionalized particles;
c. mixing both mixtures and allowing the functionalized particles to settle;
d. Measuring the fluorescence emission of mixtures PP-A and PP-B;
e. Calculating the difference between the measured emission of mixture PP-B and that of mixture PP-A to determine the protein aggregation.

2. Method according to the preceding claim, **characterized in that** the functionalized particles are functionalized with one or more of the proteins or chemicals listed below , namely Protein A, Protein L, or Protein G, StrepTactin, Streptavidin, Avidin, or Neutravidin, which are optionally complexed with biotinylated affinity ligands.

3. Method according to any one of the preceding claims, **characterized in that** the functionalized particles are present in the well designated for receiving the PP-A portion even before step a.

4. Method according to any one of the preceding claims, **characterized in that** the protein aggregates are quantified using calibration curves.

5. A method according to any one of the preceding claims, **characterized in that** the aggregate-specific fluorescent markers are selected from the following classes of fluorescent dyes:
- molecular rotors from the class of substituted julolidines, 9-(2,2-dicyanovinyl)julolidines (DCJV), and 9-(2-carboxy-2-cyanovinyl)julolidines (CCVJ);
- substituted naphthalenes or bis-naphthalenes, 8-anilino-1-naphthalenesulfonic acid (ANS) and 4,4'-dianilino-1,1'-binaphthyl-5,5'-disulfonic acid dipotassium salt (Bis-ANS);
- merocyanines, such as N-(3-sulfopropyl)-4-(p-dihexylaminostyryl)pyridinium, as well as molecules having the following formulas 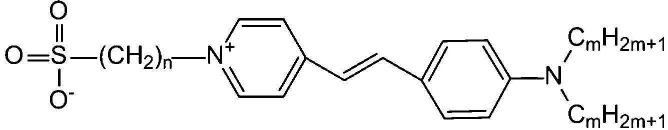 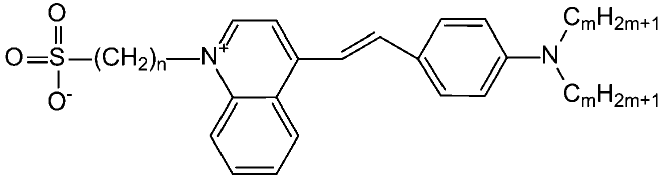 wherein n is 3 or 4 and m is an integer from 2 to 10;
- molecules having one of the formulae (I), (II), (III), (IV), (V), (VI), or (VII) 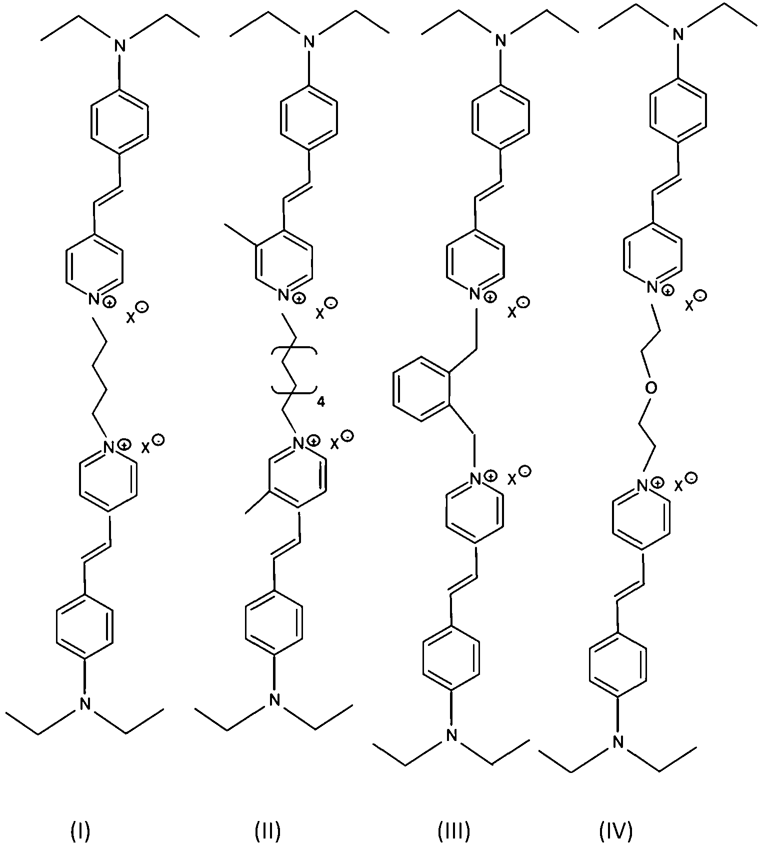 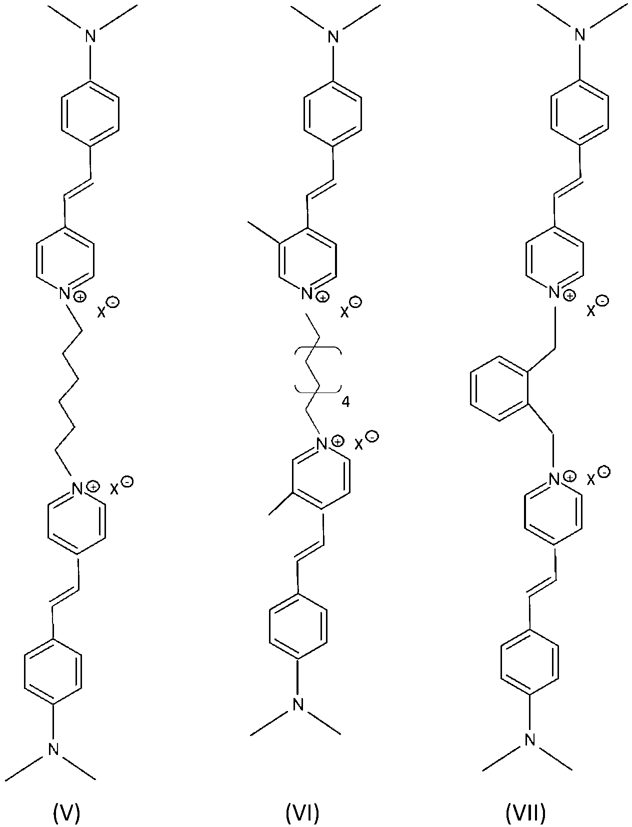 wherein X⁻ may represent the following ions: perchlorate (ClO₄⁻ ), sulfate (SO₄²⁻ ), alkanesulfonates, arylsulfonates, phosphates, tosylates, mesylates, tetrafluoroborates, as well as halide ions such as chloride, iodide, bromide, or fluoride, and any mixtures of these anions
- benzothiazoles, thioflavin T;
- phenoxazines or -oxazones, Nile red or Nile blue;
- Sulfonated azo fluorescent dyes or derivatives thereof, Congo Red or Chrysamine-G; and
- 2-[4-(dimethylamino)styryl]-1-methylpyridinium iodide (DASPMI or 2-Di-1-ASP), N-(3-sulfopropyl)-4-(p-dihexylaminostyryl)pyridinium.

6. Method according to any one of the preceding claims, **characterized in that** the functionalized particles have an average diameter in the range of about 20 to 200 µm and are functionalized with one or more of the following proteins or chemicals, namely Protein A, Protein L, or Protein G, StrepTactin, streptavidin, avidin, or neutravidin, which are optionally complexed with biotinylated affinity ligands.

7. Method according to any one of the preceding claims for reaction control in the production of pharmaceutically active proteins.

8. Method according to any one of the preceding claims 1 to 7 for use in the development of expression systems, in particular cell culture systems for the production of biologics, in particular therapeutically active antibodies.

9. Method according to any one of the preceding claims 1 to 7, for use in cell line development, in particular the identification and optimization of culture conditions for the production of biologics, in particular therapeutically active antibodies.

10. Method according to any one of the preceding claims 1 to 7, for process control in the production of biologics, in particular therapeutically active antibodies, suitable in particular for monitoring product quality during production by an expression system.

## Revendications

1. Procédé de détermination qualitative et quantitative d'agrégats protéiques en untilisant des colorants fluorescents spécifiques aux agrégats, comprenant les étapes suivantes :
a. Portionnement de l'échantillon en au moins deux portions de taille égale, PP-A et PP-B, et transfert les portions dans des puits spécialement conçus, contenant une chambre de mesure incluant une élévation se rétrécissant vers le haut dont la surface de base occupe au moins 50 % de la surface du fond du puits, la hauteur de l'élévation occupe au moins 10 % et au plus 50 % de la hauteur de la chambre de mesure, le fond du puits étant opaque à la lumière à l'exception de la surface de base de l'élévation, tandis que l'élévation est transparente à la lumière et forme la fenêtre de mesure pour la mesure de la fluorescence,
b. préparation d'un mélange comprenant la portion PP-A, au moins un marqueur de fluorescence spécifique aux l'agrégats et des particules fonctionnalisées capables de se lier à la ou aux protéines cibles, que les protéines se présentent sous forme de monomères ou d'oligomères ou d'agrégats, dans un puits A, et préparation du même mélange dans un autre récipient de mélange en utilisant la portion PP-B, mais sans particules fonctionnalisées ;
c. Mélanger les deux mélanges et sédimentation des particules fonctionnalisées;
d. Mesure de l'émission de fluorescence des mélanges PP-A et PP-B ;
e. Calculer la différence entre l'émission mesurée du mélange PP-B et celle du mélange PP-A pour la détermination de l'agrégation des protéines.

2. Procédé selon la revendication précédente, **caractérisé en ce que** les particules fonctionnalisées sont fonctionnalisées avec une ou plusieurs des protéines ou substances chimiques mentionnées ci-après , à savoir la protéine A, la protéine L ou la protéine G, la streptactine, la streptavidine, l'avidine ou la neutravidine, qui sont éventuellement complexées avec des ligands d'affinité biotinylés.

3. Procédé selon l'une des revendications précédentes, **caractérisé en ce que** les particules fonctionnalisées sont présentes dans le puits destiné à recevoir la portion de PP-A avant même l'étape a.

4. Procédé selon l'une des revendications précédentes, **caractérisé en ce que** les agrégats de protéines sont quantifiés à l'aide de courbes d'étalonnage.

5. Procédé selon l'une des revendications précédentes, **caractérisé en ce que** les marqueurs fluorescents spécifiques aux agrégats sont choisis parmi les classes de colorants fluorescents suivantes :
- les rotateurs moléculaires de la classe des julolidines substituées, des 9-(2,2-dicyanovinyl)julolidines (DCJV) et des 9-(2-carboxy-2-cyanovinyl)julolidines (CCVJ) ;
- naphtalènes ou bis-naphtalènes substitués, acide 8-anilino-1-naphtalènesulfonique (ANS) et sel dipotassique de l'acide 4,4'-dianilino-1,1'-binaphtyl-5,5'-disulfonique (Bis-ANS) ;
- des mérocyanines, telles que le N-(3-sulfopropyl)-4-(p-dihexylaminostyryl)pyridinium, ainsi que des molécules répondant aux formules suivantes 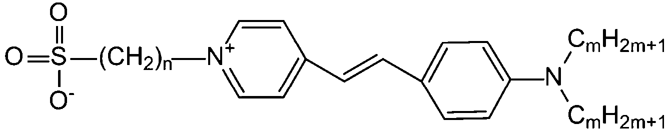 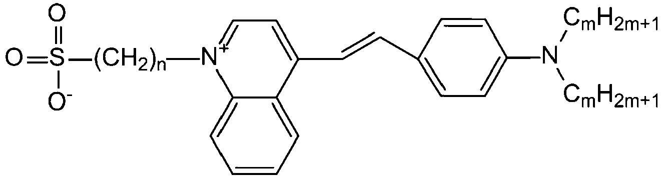 où n vaut 3 ou 4 et m est un nombre entier compris entre 2 et 10 ;
- des molécules répondant à l'une des formules (I), (II), (III), (IV), (V), (VI) ou (VII) 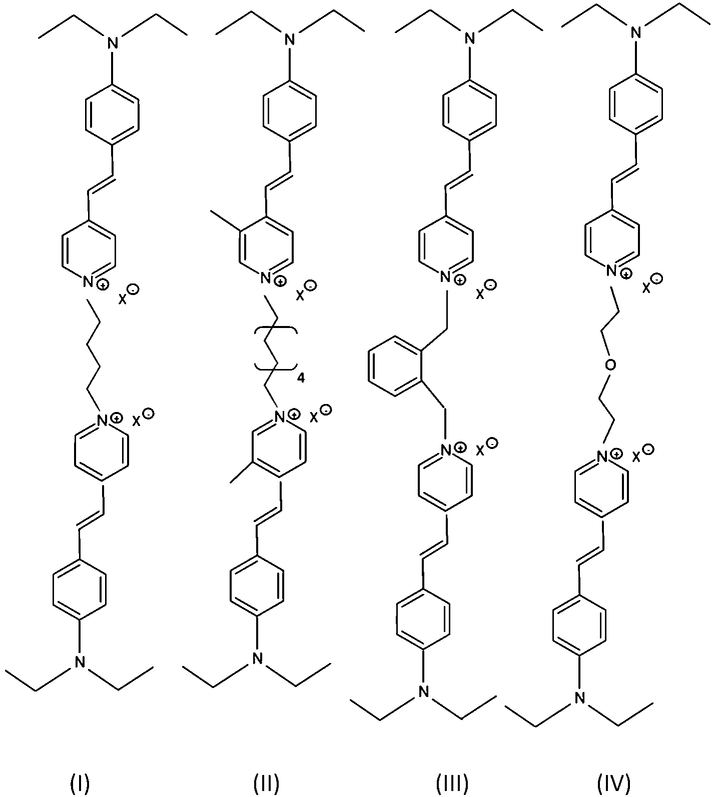 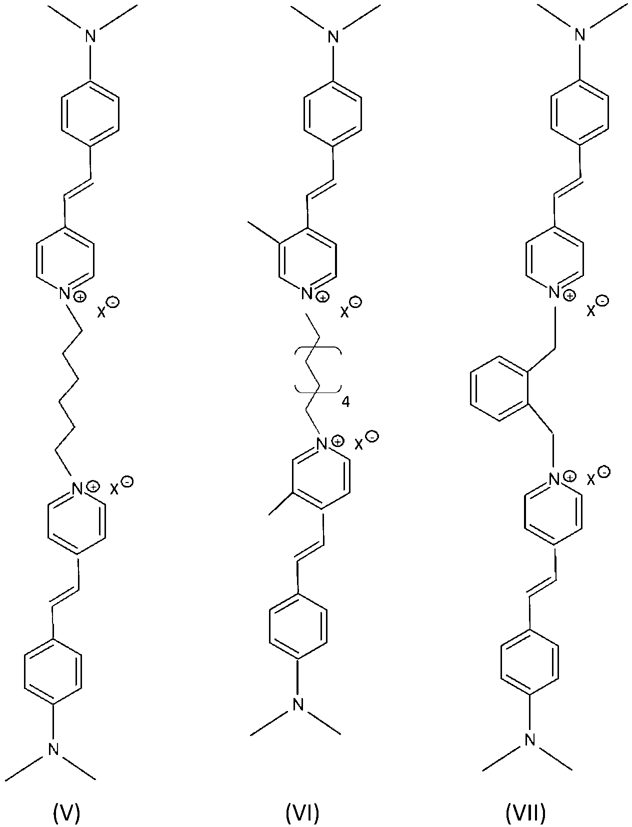 dans lesquelles X⁻ peut représenter les ions suivants : perchlorate (ClO₄⁻ ), sulfate (SO₄²⁻ ), des alcanesulfonates, des arylsulfonates, des phosphates, des tosylates, des mésylates, des tétrafluoroborates, ainsi que des ions halogénés tels que le chlorure, l'iodure, le bromure ou le fluorure, ainsi que n'importe quel mélange de ces anions
- benzothiazoles, thioflavine T ;
- phénoxazines ou -oxazones, rouge Nil ou bleu Nil ;
- colorants azoïques fluorés sulfonés ou leurs dérivés, CongoRed ou Chrysamine-G ; et
- l'iodure de 2-[4-(diméthylamino)styryl]-1-méthylpyridinium (DASPMI ou 2-Di-1-ASP), le N-(3-sulfopropyl)-4-(p-dihexylaminostyryl)pyridinium.

6. Procédé selon l'une des revendications précédentes, **caractérisé en ce que** les particules fonctionnalisées présentent un diamètre moyen compris entre environ 20 et 200 µm et sont fonctionnalisées avec une ou plusieurs des protéines ou substances chimiques suivantes, à savoir la protéine A, la protéine L ou la protéine G, la streptactine, la streptavidine, l'avidine ou la neutravidine, qui sont éventuellement complexées avec des ligands d'affinité biotinylés.

7. Procédé selon l'une des revendications précédentes pour le contrôle de la réaction lors de la production de protéines pharmaceutiquement actives.

8. Procédé selon l'une des revendications 1 à 7 précédentes, destiné à être utilisé dans le développement de systèmes d'expression, en particulier de systèmes de culture cellulaire pour la production de produits biologiques, en partulier d'anticorps thérapeutiquement actifs.

9. Procédé selon l'une des revendications 1 à 7 précédentes, destiné à être utilisé dans le développement de lignées cellulaires, en particulier pour la recherche et l'optimisation de conditions de culture pour la production de produits biologiques, en particulier d'anticorps thérapeutiquement actifs.

10. Procédé selon l'une des revendications 1 à 7 précédentes, pour le contrôle de processus lors de la production de produits biologiques, en particulier d'anticorps thérapeutiques, adapté notamment à la surveillance de la qualité du produit pendant la production par un système d'expression.
